# EUROPEAN PATENT SPECIFICATION

(11) **EP 1 705 496 B1**
(45) Date of publication and mention of the grant of the patent: **13.12.2006**
(21) Application number: 05425171.5
(22) Date of filing: 24.03.2005
(51) Int. Cl.: G01S 5/12

(54) **Device for determining the relative position between vehicles**
Vorrichtung zur Bestimmung der relativen Position zwischen Fahrzeugen
Dispositif pour déterminer la position relative entre véhicules

(43) Date of publication of application: 27.09.2006
(73) Proprietor: C.R.F. Società Consortile per Azioni, 10043 Orbassano (Torino) (IT)
(72) Inventor: Audone, Michela, Strada Torino, 50 10043 Orbassano (IT)
(74) Representative: Cerbaro, Elena

(56) References cited:
- US-A1- 2003 009 275
- US-B1- 6 298 306
- US-B1- 6 614 387

## Description

The present invention relates to a device for determining the relative position between vehicles.

As is known, devices for determining the relative position between vehicles have been proposed for supplying, for a pair of close vehicles, the relative position in terms of the distance existing between the two vehicles and in terms of the angle formed between the straight line joining the vehicles and a direction of vehicle advance.

Said known devices use technologies of a radar or satellite-location type.

The use of radar for applications in the automotive field involves high costs and a performance that is not always adequate. Satellite location does not instead achieve, unless high-cost GPS systems are used, the precision necessary for applications that have the purpose of determining the relative position between vehicles.

United States patent application US 2005/0009275 describes a device for detecting the relative position between two vehicles.

The purpose of the present invention is to provide a device for determining the relative position between vehicles that will be extremely simple and will not entail complex technologies for its production.

The foregoing purpose is achieved by the present invention according to the appended claims.

The invention will be now illustrated with particular reference to the attached plate of drawings, which illustrate a preferred non-limiting example of embodiment thereof and in which:
- Figure 1 is a schematic illustration of a device for determining the position between vehicles, in particular motor vehicles, obtained according to the present invention; and
- Figures 2 and 3 illustrate steps of the method of the present invention corresponding to the calculation of the relative position between two vehicles.

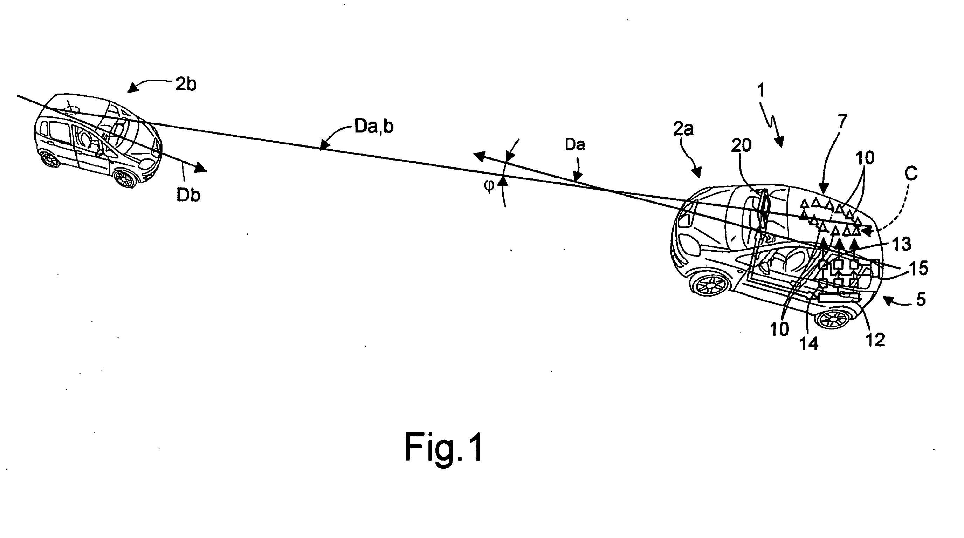

Designated, as a whole, by 1 in Figure 1 is a device for detecting the relative position between vehicles obtained according to the invention.

The device 1 is designed to detect at least the relative position between at least one first vehicle 2a (for example, a motor vehicle) and a second vehicle 2b (for example, another motor vehicle) which move following instantaneous directions defined by vectors Da and Db.

The relative position is identified via the distance Da,b (absolute value, scalar quantity) existing between the two vehicles 2a and 2b and the angle ϕ that a direction of advance (for example the direction Da) forms with the straight line joining the two vehicles 2a and 2b.

Each vehicle 2a, 2b is provided with a radio transceiver apparatus 5 communicating with a transceiving antenna 7 and is conveniently (but not exclusively) set on a top portion of the vehicle (roof), for example, an outer roof portion of the vehicle.

Conveniently but not exclusively, the transceiving antenna 7 is formed by an array of antennas 10 arranged in a circular path C.

The distance between an antenna 10 and those adjacent thereto is less than the wavelength of the signal received/transmitted by the directional antenna 7.

The number of antennas 10 forming the antenna 7 depends upon the frequency used. For example, using a frequency of transmission/reception in the 5795-5815-MHz band, dedicated to RTTT (Road Transport and Traffic Telematics), the number of antennas 10 is in the region of thirty. Obviously, the number of antennas 10 used is also a function of the accuracy that it is intended to achieve in determining the relative position.

According to the present invention, the radio transceiver apparatus 5 is designed to perform alternatively:
- steps of transmission of a known signal having given spectral characteristics, i.e., a known transmitted power Pt (for example, 2 W), a given frequency fq, and a pre-set digital modulation modality (for example, FSK, GFSK, etc.); and
- steps of identification and reception of the known signal coming from another vehicle.

Conveniently, each antenna 10 communicates, in the example illustrated, with a numeric processing unit 12 (illustrated schematically) through a mixer 13 and an analog-to-digital converter device 14, which are set in series.

The mixer 13 further communicates with a synthesizer 15.

During the steps of identification and reception, the signal picked up by each antenna 10 is instead supplied, in a digital format, to the numeric processing unit 12, which executes the following operations:
a) it handles the digital transmission protocol, communicating with the other devices, handling the step of search for other devices, the turn for transmission, etc.; and
b) it processes the signals for identification of the relative position of the other vehicles via:
   - measurement of the received power Pr of the selected signal in order to identify the distance Da,b of the source that has generated said signal and hence the distance between the two vehicles - the distance Da,b is obtained easily by means of algorithms (of a known type) that exploit the laws of propagation; and
   - processing of the signal selected coming from each antenna 10 of the array using a direction-finding algorithm (of a known type), which, exploiting beating and weighting techniques, supplies the indication on the angle ϕ.

As regards the operation designated above by b), it is pointed out how, although frequency bands in transmission/reception would preferably have to be free, the possibility that signals not belonging to the system will be recognized as selectable signals and hence as ones coming from other vehicles cannot be excluded.

For the above purpose, the entire procedure is managed via a digital protocol which handles communication between the vehicles. Said protocol has the purpose of causing the various devices (all of which transmit according to the same protocol/encoding) to recognize one another, of causing the devices that recognize one another to form a wireless network, of handling entry into and exit from said network, of handling the turn for communication, etc.

When only one device is present in a given area, this remains in the search mode, i.e., a mode in which it transmits and waits for receipt of digital strings encoded according to the protocol in question in order to recognize another device that has entered the transmission operating range.

Once at least two devices are present in the transmission operating range, these come to form a wireless network, in which each device in turn transmits whilst all the other devices receive (network of a "token ring" type).

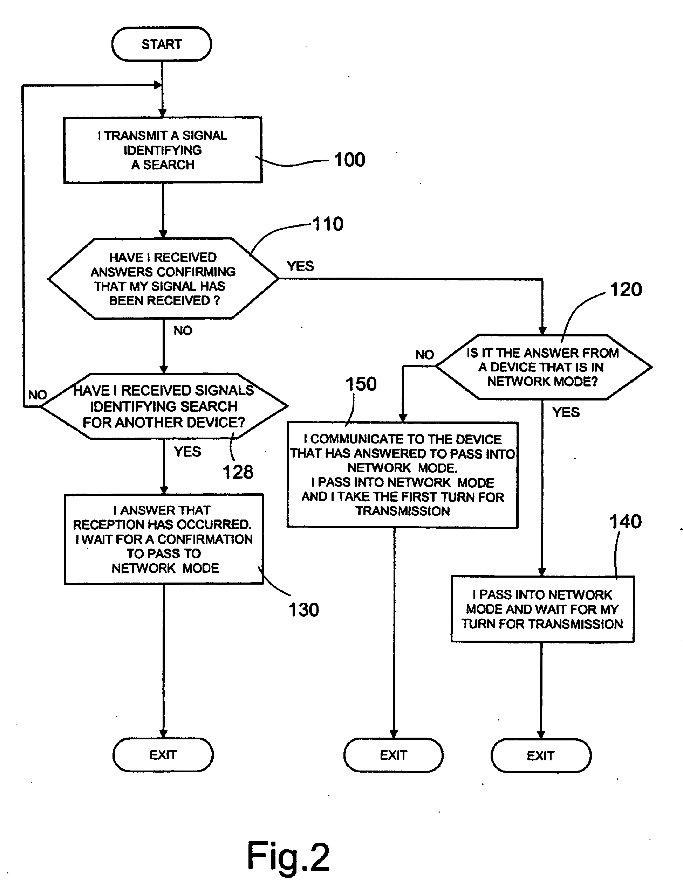

Said search operations are illustrated schematically in Figure 2.

In particular, a first block 100 is envisaged, in which a pre-set search signal is transmitted to identify the start of a search mode.

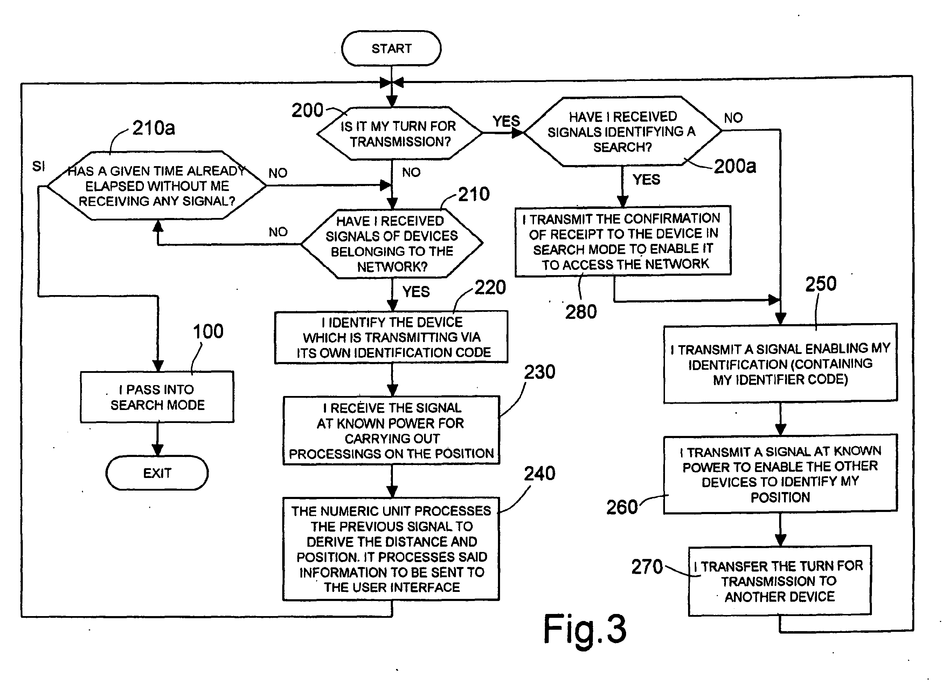

Block 100 is followed by a block 110, in which the device sets itself in a wait state, awaiting a response signal identifying confirmation of that the search signal has been received by the numeric unit 12 of another vehicle; in the case of confirmation (the search signal irradiated has been received by another vehicle that has answered), block 110 is followed by a block 120; otherwise (no response signal received), block 110 is followed by a block 128, in which the device sets itself in a wait state, awaiting search signals coming from other vehicles. Should said search signals not be detected within a pre-set time interval, block 128 is followed by block 100; in the case where at least one search signal is detected, block 128 is followed by a block 130, in which a signal is sent identifying that reception has occurred (search terminated successfully); next, there is a passage to a network mode (described in Figure 3).

In block 120 a check is made to verify whether the response signal received identifies a network mode being used by the numeric processing unit 12 that has transmitted the response signal; if so, block 120 is followed by block 140, which sets the numeric unit 12 in the network mode; otherwise block 120 is followed by a block 150, in which a signal requesting change of state is sent to ask the vehicle that has answered to pass into the network mode.

Figure 3 illustrates the operations performed in the network mode.

Said operations comprise an initial block 200, in which the electronic-processing unit 12 on board the vehicle checks whether its own turn for transmission has arrived.

If it has not, block 200 is followed by a block 210, in which the device sets itself in a wait state, awaiting signals coming from other devices belonging to the network indicating that reception has occurred; if a signal indicating that reception has occurred has been received (exit YES block 210), block 210 is followed by blocks 220, 230 and 240, in which, respectively, the following operations are carried out:
- identification of the device that is transmitting via recognition of an identifying numeric code thereof;
- reception of the signal at known power and use of said power for calculation of the distance; and
- trigonometric processing of the signal at known power for determining the relative position between the vehicles.

From block 240, control further returns to block 200.

In the case where, in block 210, receipt of signals indicating that reception has occurred were not detected in a pre-set time interval (block 210a - output YES) the search mode is again reselected (block 100). Block 210a is then followed by block 100.

In the case where, instead, in block 200 the electronic-processing unit 12 detects that its own turn for transmission has arrived, block 200 is followed, in the absence of other signals that identify a search (block 200a - output NO) by blocks 250, 260 and 270, in which the following operations are, respectively, carried out:
- transmission of a signal containing the identifying numeric code;
- transmission of the signal at known power that will be used by the other vehicles for calculating the distance;
- transfer of the turn for transmission to another vehicle; for said purpose, block 270 is followed by block 200.

Should in block 200a the presence of other signals that identify a search be detected, then block 200a is followed by a block 280, which causes transmission of a signal confirming reception to the device in the search mode in such a way that the latter can access the network. Block 280 is then followed by block 250.

In this way, during the turn for transmission, a signal identifying the transmitting device (containing its "identifying code", block 250) is first transmitted, and then (block 260) a useful signal is transmitted to the other devices for identification of the position of the transmitting device.

The receiving devices use the techniques previously cited for determining the position of the transmitting device and for storing it and then supplying it to the user interface.

The "code" of each device, which is useful for differentiating it and distinguishing it from the others, as a factory code that is assigned at the moment of assembly.

Entry into and exit from the network thus formed occurs is dictated by the algorithm.

Two distinct steps are thus available:
- search step (Figure 2), when a device does not find other devices in its operating range (the power of the signal transmitted thereby or by the other devices is not sufficient to cover the distance that separates them; 2 W correspond approximately to 5 km); and
- step of communication with the other devices (Figure 3), when at least two devices are within the operating range; at this point, transmission occurs in turns as illustrated above.

The numeric unit 12 communicates with a display device 20 to supply to the driver of the vehicle the information on the distance Da,b of adjacent vehicles and on the position ϕ of said vehicles; conveniently, said information can be supplied through a graphic interface. Also auxiliary information could be supplied to the driver, such as: velocity of the adjacent vehicles, signals of alert in the case of sharp decelerations, etc.

For example, for the above purpose, the numeric unit can process the time taken by a vehicle to pass from one position to another and then calculate the velocity and acceleration of said vehicle.

In this way, it is possible to understand whether a vehicle that is in front of another and is proceeding in the same direction is undergoing sharp decelerations and is hence creating situations of danger.

Likewise, also a vehicle that proceeds along the path of another can be identified, etc.

All of the above dangerous situations can be stored within the numeric unit and, upon occurrence one of said situations, a signal of alarm can be issued to the user (driver).

## Claims

1. A device for detecting the relative position between at least two vehicles (2a, 2b) adapted to supply at an output the information signal associated with the distance (Da,b) between the two vehicles and with the angle (ϕ) that the direction of advance (Da; Db) of one of the two vehicles forms with a straight line joining the two vehicles (2a, 2b), said device comprising a radio transceiver apparatus (5) configured to be connected to a transceiving antenna (7) said radio transceiver apparatus (5) being adapted to alternatively:
• transmit a signal having pre-set spectral characteristics; and
• receive the signals coming from the other vehicle; said device further comprising a numeric processing unit (12) adapted to process the signals picked up by said antenna to identify a signal coming from the other vehicle that is recognized and used for calculate said distance and said angle, **characterized in that** said numeric processing unit comprises:
• search means (100) designed to generate and transmit a preset interrogation signal for starting a search mode;
• wait-for-answer means (110) which set themselves in a wait state, awaiting a response signal identifying confirmation that the interrogation signal has been received by another vehicle; in the case where no answer is received, said wait-for-answer means (110) select wait-for-signal means (128) which set themselves in a wait state, awaiting interrogation signals coming from other vehicles; said wait-for-signal means (128) selecting, in the case where at least one interrogation signal is detected, confirmation means (130) that send a signal identifying that reception has occurred and give access to a network mode.

2. The device according to Claim 1, in which said numeric processing unit (12) carries out the following operations:
• it selects, from among the various signals received, the useful signal having the pre-set spectrum and hence recognized as generated by another vehicle operating with the same system;
• it measures the received power (Pr) of the selected signal in order to identify said distance (Da,b) of the source that has generated said signal and consequently the distance between the two vehicles; and
• it processes the selected signals coming from each antenna 10, supplying them to a directiorz-finding algorithm which, supplies the indication on said angle (ϕ).

3. The device according to Claim 2, in which said transceiving antenna is formed by an array of antennas (10).

4. The device according to Claim 3, in which said transceiving antenna is formed by an array of antennas (10) arranged in a circular path.

5. The device according to Claim 1, in which: control means (120) are envisaged, which are selected by said wait-for-answer means (110) in the case where an answer has been received; said control means (120) verify whether the response signal received identifies a network mode being used; if so, state-change means (140) are selected, which issue a command for a transition into said network mode; otherwise, state-change-request means (150) are selected, which send a message of state-change request to ask the vehicle that has answered to pass into the network mode.

6. The device according to Claim 1 or Claim 5, in which the means that provide said network mode comprise:
• decision-making means (200), in which the turns for transmission are established;
should a turn for transmission not be identified, means are selected, designed to carry out the following operations:
• identify the numeric unit (12) that is transmitting via recognition of a numeric code thereof identifying the vehicle;
• receive the signal at known power and use of said signal for calculating the distance;
• process the signal trigonometrically at known power for determining the relative position between the vehicles; should a turn for transmission be identified, means are selected designed to carry out the following operations:
• transmit a signal containing the numeric code identifying the vehicle;
• transmit the signal at known power that will be used by the other vehicles for calculating the distance; and
• transfer of the turn for transmission to a numeric unit (12) of another vehicle.

## Patentansprüche

1. Vorrichtung zum Detektieren der relativen Position zwischen mindestens zwei Fahrzeugen (2a, 2b), wobei die Vorrichtung dazu ausgebildet ist, an einem Ausgang das Informationssignal abzugeben, das der Distanz (Da,b) zwischen den zwei Fahrzeugen und dem Winkel (ϕ) zugeordnet ist, den die Fahrtrichtung (Da; Db) von dem einen der zwei Fahrzeuge mit einer die beiden Fahrzeuge (2a, 2b) verbindenden Geraden bildet,
wobei die Vorrichtung eine Funk-Transceivereinrichtung (5) aufweist, die dazu ausgebildet ist, mit einer Transceiverantenne (7) verbunden zu werden;
wobei die Funk-Transceivereinrichtung (5) dazu ausgebildet ist, alternativ folgendes auszuführen:
• Senden eines Signals, das voreingestellte spektrale Eigenschaften hat; und
• Empfangen der von dem anderen Fahrzeug kommenden Signale;
wobei die Vorrichtung ferner eine numerische Verarbeitungseinheit (12) aufweist, die dazu ausgebildet ist, die von der Antenne aufgenommenen Signale zu verarbeiten und ein von dem anderen Fahrzeug kommendes Signal zu bezeichnen, das erkannt und zum Berechnen der genannten Distanz und des genannten Winkels genutzt wird,
**dadurch gekennzeichnet,**
**daß** die numerische Verarbeitungseinheit folgendes aufweist:
• eine Sucheinrichtung (100), die dazu ausgebildet ist, ein voreingestelltes Abfragesignal zum Starten eines Suchmodus zu erzeugen und zu senden;
• Warten-auf-Antwort-Einrichtungen (110), die sich selbst in einen Wartezustand setzen und auf ein Antwortsignal warten, das die Bestätigung erkennt, daß das Abfragesignal von einem anderen Fahrzeug empfangen worden ist;
wobei dann, wenn keine Antwort empfangen wird, die Warten-auf-Antwort-Einrichtungen (110) Warten-auf-Signal-Einrichtungen (128) auswählen, die sich selbst in einen Wartezustand setzen und auf von anderen Fahrzeugen kommende Abfragesignale warten;
wobei die Warten-auf-Signal-Einrichtungen (128) dann, wenn mindestens ein Abfragesignal detektiert wird, Bestätigungseinrichtungen (130) auswählen, die ein Signal aussenden, das bezeichnet, daß ein Empfang stattgefunden hat, und den Zugang zu einem Netzmodus ermöglicht.

2. Vorrichtung nach Anspruch 1,
wobei die numerische Verarbeitungseinheit (12) die folgenden Operationen ausführt:
• sie wählt unter den verschiedenen empfangenen Signalen das Nutzsignal aus, welches das voreingestellte Spektrum hat und somit als von einem anderen Fahrzeug erzeugt erkannt wird, das mit dem gleichen System arbeitet;
• sie mißt die empfangene Leistung des ausgewählten Signals, um die genannte Distanz (Da,b) der Quelle, die dieses Signal erzeugt hat, und infolgedessen die Distanz zwischen den zwei Fahrzeugen zu identifizieren; und
• sie verarbeitet die von jeder Antenne (10) kommenden ausgewählten Signale und führt sie einem Peilalgorithmus zu, der die Anzeige für den genannten Winkel (ϕ) liefert.

3. Vorrichtung nach Anspruch 2,
wobei die Transceiverantenne aus einer Gruppe von Antennen (10) gebildet ist.

4. Vorrichtung nach Anspruch 3,
wobei die Transceiverantenne aus einer Gruppe von Antennen (10) gebildet ist, die längs einer Kreisbahn angeordnet sind.

5. Vorrichtung nach Anspruch 4,
wobei Steuereinrichtungen (120) vorgesehen sind, die von den Warten-auf-Antwort-Einrichtungen (110) dann ausgewählt werden, wenn eine Antwort empfangen worden ist;
wobei die Steuereinrichtungen (120) prüfen, ob das empfangene Antwortsignal den Gebrauch eines Netzmodus bezeichnet;
wobei dann, wenn dies der Fall ist, Zustandsänderungseinrichtungen (140) ausgewählt werden, die einen Befehl für einen Übergang in diesen Netzmodus ausgeben;
wobei andernfalls Zustandsänderungs-Anforderungseinrichtungen (150) ausgewählt werden, die eine Nachricht einer Zustandsänderungs-Anforderung senden, um das Fahrzeug, das geantwortet hat, aufzufordern, in den Netzmodus zu gehen.

6. Vorrichtung nach Anspruch 1 oder Anspruch 5,
wobei die Einrichtungen, die den Netzmodus bereitstellen, folgendes aufweisen:
• Entscheidungseinrichtungen (200), in denen die Reihenfolge zum Senden festgelegt wird;
wobei dann, wenn eine Reihenfolge zum Senden nicht bezeichnet wird, Einrichtungen ausgewählt werden, die dazu bestimmt sind, die folgenden Operationen auszuführen:
• Bezeichnen der numerischen Einheit (12), die sendet, durch Erkennen eines Zahlencodes derselben, der das Fahrzeug bezeichnet;
• Empfangen des Signals mit bekannter Leistung und Nutzen dieses Signals zum Berechnen der Distanz;
• trigonometrisches Verarbeiten des Signals mit bekannter Leistung, um die relative Position zwischen den Fahrzeugen zu bestimmen;
wobei dann, wenn eine Reihenfolge zum Senden bezeichnet wird, Einrichtungen ausgewählt werden, die dazu bestimmt sind, die folgenden Operationen auszuführen:
• Senden eines Signals, das den das Fahrzeug bezeichnenden Zahlencode enthält;
• Senden des Signals mit bekannter Leistung, das von den anderen Fahrzeugen genutzt wird, um die Distanz zu berechnen; und
• Übertragen der Reihenfolge zum Senden an eine numerische Einheit (12) eines anderen Fahrzeugs.

## Revendications

1. Dispositif pour détecter la position relative entre au moins deux véhicules (2a, 2b) adapté pour fournir à une sortie le signal d'information associé avec la distance (Da, b) entre les deux véhicules et avec l'angle (ϕ) que la direction d'approche (Da, Db) d'un des deux véhicules forme avec une ligne droite joignant les deux véhicules (2a, 2b),
ledit dispositif comprenant un appareil émetteur récepteur radio (5) configuré pour être en liaison avec une antenne émettrice réceptrice (7), ledit appareil émetteur récepteur radio (5) étant adapté pour de façon alternative :
- transmettre un signal ayant des caractéristiques spectrales préréglées, et
- recevoir les signaux provenant de l'autre véhicule,
ledit dispositif comprenant en outre une unité de traitement numérique (12) adaptée pour traiter les signaux captés par ladite antenne, à identifier un signal venant de l'autre véhicule qui est reconnu, et utilisé pour calculer ladite distance et ledit angle, **caractérisé en ce que** ladite unité de traitement numérique comprend :
- des moyens de recherche (100) conçus pour générer et transmettre un signal d'interrogation préréglé pour le démarrage d'un mode de recherche ;
- des moyens d'attente de réponse (110) qui se règlent eux-mêmes dans un état d'attente, en attente d'un signal de réponse identifiant la confirmation que le signal d'interrogation a été reçu par un autre véhicule ; dans le cas ou aucune réponse n'est reçue, lesdits moyens d'attente de réponse (110) sélectionnent des moyens d'attente de signal (128) qui se règlent eux-mêmes dans un état d'attente, en attente des signaux d'interrogation venant d'autres véhicules, lesdits moyens d'attente de signal (128) sélectionnant, dans le cas où au moins un signal d'interrogation est détecté, des moyens de confirmation (130) qui envoient un signal identifiant que la réception s'est produite et donne accès à un mode réseau.

2. Dispositif selon la revendication 1, dans lequel ladite unité de traitement numérique (12) effectue les opérations suivantes :
- elle sélectionne, à partir des divers signaux reçus, le signal utile qui a le spectre présélectionné et qui est donc reconnu comme généré par un autre véhicule fonctionnant avec le même système ;
- elle mesure la puissance reçue (Pr) du signal sélectionné dans le but d'identifier ladite distance (Da, b) de la source qui a généré ledit signal et en conséquence la distance entre les deux véhicules, et
- elle traite les signaux sélectionnés provenant de chaque antenne (10), leur fournissant un algorithme de recherche de direction qui fournit l'indication sur ledit angle (ϕ).

3. Dispositif selon la revendication 2, dans lequel ladite antenne émettrice réceptrice est formée par un ensemble d'antennes (10).

4. Dispositif selon la revendication 3, dans lequel ladite antenne émettrice réceptrice est formée par un ensemble d'antennes (10) disposé de façon circulaire.

5. Dispositif selon la revendication 1 dans lequel des moyens de contrôle (120) sont envisagés, lesquels sont sélectionnés par lesdits moyens d'attente de réponse (110) dans le cas où une réponse a été reçue, lesdits moyens de contrôle (120) vérifient si le signal de réponse reçu identifie un mode réseau qui est utilisé, s'il en est ainsi, les moyens de changement d'état (140) sont sélectionnés, lesquels émettent une commande pour une transition dans ledit mode de réseau. Par ailleurs, les moyens de demande de changement d'état (150) sont sélectionnés et envoient un message de demande de changement d'état pour demander au véhicule qui a répondu de passer dans le mode réseau.

6. Dispositif selon la revendication 1 ou la revendication 5, dans lequel les moyens qui fournissent ledit mode réseau comprennent :
- Des moyens de prise de décision (200), dans lesquels les inversions pour transmission sont établies.
- si une inversion pour transmission n'a pas été identifiée, des moyens seront sélectionnés et sont conçus pour effectuer les opérations suivantes :
- identifier l'unité numérique (12) qui transmet via la reconnaissance d'un code numérique de celui-ci l'identification du véhicule
- recevoir le signal à une puissance connue et utiliser ledit signal pour calculer la distance
- traiter le signal de façon trigonométrique à puissance connue pour déterminer la position relative entre les véhicules.
- si une inversion pour transmission a été identifiée, des moyens seront sélectionnés et conçus pour effectuer les opérations suivantes :
- transmettre un signal contenant le code numérique d'identification du véhicule
- transmettre le signal à une puissance connue qui sera utilisé par les autres véhicules pour le calcul de la distance, et
- transférer l'inversion de transmission vers une unité numérique (12) d'un autre véhicule.
